# EUROPÄISCHE PATENTANMELDUNG

(11) **EP 1 253 072 A2**
(43) Veröffentlichungstag der Anmeldung: **30.10.2002**
(21) Anmeldenummer: 02004823.7
(22) Anmeldetag: 02.03.2002
(51) Int. Cl.: B62J 27/00

(54) **Fahrzeug (G)**

(30) Priorität: 27.04.2001 DE 10120848
(71) Anmelder: Bayerische Motoren Werke Aktiengesellschaft, 80809 München (DE)
(72) Erfinder: Seidl, Josef, 84130 Dingolfing (DE)

(57) **Zusammenfassung**

Die Erfindung beschreibt ein Fahrzeug, insbesondere Zweiradfahrzeug wie Motorrad oder ähnlichem, mit einem Rückhaltesystem, vorzugsweise einer Airbageinrichtung. Um zu verhindern, dass sich das Fahrzeug beim Aufprall gegen ein Hindernis hinten hochstellt, wird beim oder kurz vor dem Aufprall der Gesamtschwerpunkt des Fahrzeugs und der Aufsaßen abgesenkt. Erreicht wird dies durch Veränderungen des Federsystems, mit dem die Fahrzeugräder am Fahrzeugaufbau angebracht sind. Eine weitere Möglichkeit besteht darin, den Fahrzeugsitze oder deren Sitzpolster abzusenken. Als zusätzliche Maßnahme lässt darüber hinaus noch das Vorderrad blockieren.

## Beschreibung

Die Erfindung bezieht sich auf ein Fahrzeug, insbesondere Zweiradfahrzeug wie Motorrad oder ähnlichem, wie es im Oberbegriff des Hauptanspruchs beschrieben ist.

Die DE 197 29 627 A1 zeigt einen Airbag im Tankbereich eines Motorrades, der sich bei einer Kollision des Motorrades mit einem Hindernis vor dem Fahrer aufbläst und ihn schützt. Durch den Airbag wird der Fahrer auf seinem Fahrersitz gehalten. Durch diese Rückhaltung besteht aber die Wahrscheinlichkeit, dass sich das Fahrzeug aufstellt, das heißt, das Heck dreht über die Radachse des Vorderrades nach oben. Damit schützt der Airbag den Fahrer zwar beim Primärstoß, beim Sturz auf die Straße aus größerer Höhe erleidet er möglicherweise aber weitere Verletzungen. Des Weiteren kann es auch zum Überschlag des Fahrzeugs kommen, und der Fahrer wird unter Umständen zwischen Fahrzeug und Hindernis eingequetscht.

Aufgabe der Erfindung ist es, ein Hochstellen des Fahrzeuges bei einer Kollision mit einem Hindernis zu verhindern.

Die Aufgabe wird erfindungsgemäß mit den kennzeichnenden Merkmalen des Anspruchs 1 gelöst. Weitere vorteilhafte Ausgestaltungen ergeben sich aus den Unteransprüchen.

Das Prinzip der Erfindung besteht im wesentlichen darin, im Kollisionsfall den Schwerpunkt des Gesamtsystems Fahrzeug mit Fahrer und - soweit vorhanden - Beifahrer abzusenken. Dadurch werden der wirksame Hebelarm und das daraus resultierende Drehmoment, das zum Hochstellen bzw. Überschlag führt, verringert. Um dies zu verreichen, greift die Erfindung an verschiedenen Stellen ein. Zum einen wird die Federung verstellt. Alternativ oder zusätzlich kann der Fahrzeugsitz abgesenkt werden. Schließlich lässt sich auch noch das Vorderrad durch Bremseneingriff blockieren. Diese letzte Maßnahme führt nicht im eigentlichen Sinne zu einer Absenkung des Schwerpunkts, sondern verlagert den Drehpunkt aus der Radachse heraus zu dem Anstoßpunkt des Vorderrades an dem Hindernis. Damit werden aber wiederum die Hebel- und Drehmomentverhältnisse günstig im Sinne der gestellten Aufgabe beeinflusst.

In einer vorteilhaften Ausgestaltung der Erfindung sind die Fahrzeugräder über Schraubenfedern gegenüber dem Fahrzeugaufbau abgefedert. In diesem Fall wird wenigstens eine Federbasis, also das untere Stützlager einer Schraubenfeder im Kollisionsfall nach unten verstellt. Dadurch sinkt das Fahrzeug mit den Aufsaßen ab, so dass sich der Gesamtschwerpunkt ebenfalls nach unten bewegt. Die Federbasis kann dabei elektrisch oder hydraulisch gelöst werden. Die hierfür notwendigen Stellglieder werden von der ohnehin vorhandenen Airbag-Auslöseelektronik angesteuert.

Die soeben beschriebene Lösung hat den Vorteil, dass der Vorgang reversibel ist. Sollte es aus irgendwelchen Gründen doch nicht zur Kollision kommen, lässt sich das Federungssystem problemlos wieder in den ursprünglichen Zustand zurückführen. Andererseits sind die für diese Lösung erwähnten Stellglieder und deren Ansteuerung relativ aufwendig.

Einfacher lässt sich demgegenüber die besagte Federbasis mit einem Bolzen sichern. Im Kollisionsfall kann dieser Bolzen in einer vorteilhaften Ausführung durch die Crashenergie herausgeschlagen werden, so das die Federbasis bzw. das Stützlager nach unten fällt und das Fahrzeug sich wieder in der bereits beschriebenen Weise absenkt. In einer weiteren zweckmäßigen Ausgestaltung kann der Bolzen - ähnlich wie in der zuvor dargestellten Ausführung - auch von einem Stellglied entfernt werden. Das Stellglied wird in diesem Fall wiederum von der Airbag-Auslöseelektronik angesteuert.

In einer weiteren vorteilhaften Ausführung wird nicht das untere Stützlager freigegeben, sondern die Schraubenfeder wird zwischen den Stützlagern durch ein geeignetes Zug- oder Druckelement zusammengespannt. Dabei wird zweckmäßigerweise das obere Stützlager in Richtung der unteren Federbasis gedrückt.

Werden für die Federung der Fahrzeugräder hydraulische oder pneumatische Federn verwendet, ist es weiter vorteilhaft, den Druck in diesen Federn im Falle einer Kollision zu vermindern. Dadurch senkt sich das Fahrzeug wiederum und mit ihm der Gesamtschwerpunkt.

Neben einem solchermaßen gesteuerten Federungssystem oder alternativ hierzu lässt sich zur Schwerpunktabsenkung die Höhe des Fahrzeugsitzes verstellen. Sofern der Fahrzeugsitz als höhenverstellbarer Sitz ausgelegt ist, kann im Kollisionsfall vorteilhafterweise die Verriegelung der Höhenverstellung gelöst werden. Der Sitz rutscht so in seine niedrigste Verstellposition und mit ihm die auf ihm befindlichen Aufsaßen mit der Folge, dass sich wiederum der Gesamtschwerpunkt absenkt. Ebenso kann in zweckmäßiger Weise auch ein Stellglied den Fahrzeugsitz in die entsprechende tiefere Position bewegen.

Eine weitere vorteilhafte Ausgestaltung sieht einen Fahrzeugsitz vor mit einem Sitzpolster, das mit Luft aufgeblasen ist. Im Crashfall wird die Luft abgelassen, so dass sich der Fahrer und mit ihm der Gesamtschwerpunkt absenkt.

Ganz allgemein können die meisten der beschriebenen Maßnahmen - wie teilweise bereits erwähnt - durch die Auslöseelektronik für den Airbag gesteuert werden. Diese Auslöseelektronik erhält über geeignete Crashsensoren die entsprechenden Signale für einen unmittelbar bevorstehenden oder soeben erfolgten Aufprall. Es lässt sich demnach sowohl eine Pre Crash-Sensorik oder bzw. ergänzend eine herkömmliche Crash-Sensorik einsetzen.

Weitere Vorteile der Erfindung ergeben sich aus der nachfolgenden Beschreibung eines Ausführungsbeispiels und anhand der dazugehörenden Zeichnung. Es zeigen
- Figur 1: eine Prinzipdarstellung eines Motorrades beim Anprall gegen ein Hindernis und
- Figur 2: in vergrößertem Maßstab eine Seitenansicht eines wirklichkeitsnäheren Motorrades mit Maßnahmen zur Schwerpunktsabsenkung.

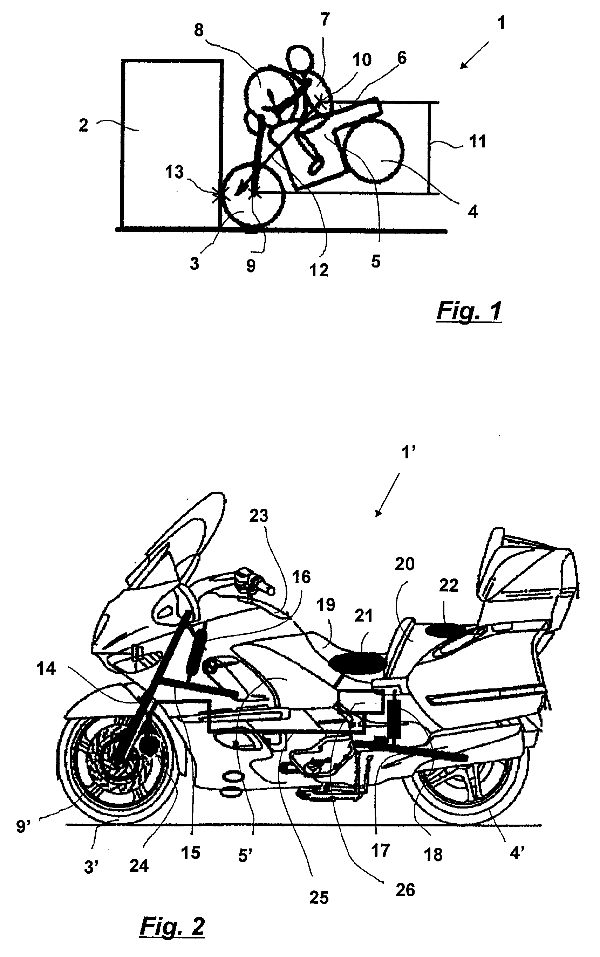

**Figur 1** zeigt den Moment, nach dem gerade ein Motorrad 1 gegen ein Hindernis 2 geprallt ist. Das Motorrad 1 weist ein Vorderrad 3 und ein Hinterrad 4 auf, die - in der Figur 1 zwar nicht dargestellt - federnd an einem Fahrzeugaufbau 5 angebracht sind. Zum Fahrzeugaufbau 5 zählt auch ein Fahrzeugsitz 6, auf dem ein Fahrer 7 sitzt. Im vorderen Bereich des Motorrads 1, also dort, wo sich üblicherweise bei herkömmlichen Motorrädern der Kraftstofftank befindet, hat sich bereits ein Airbag 8 entfaltet, der den Fahrer 7 vor dem Hindernis 2 schützt.

Das Motorrad 1 stellt sich nach **Figur 1** gerade hoch, das heißt, das Motorrad dreht über eine Radachse 9 des Vorderrades 3 gegen den Uhrzeigersinn. Das Hinterrad 4 hat bereits von der Fahrbahn abgehoben. Bedingt wird dies durch die am Gesamtsystem Motorrad/Fahrer auftretenden Hebel- und Drehmomentverhältnisse. Mit 10 ist der Gesamtschwerpunkt dieses Systems bezeichnet, an dem sowohl das nach unten gerichtete Gesamtgewicht des Motorrads und des Fahrers als auch die horizontal gerichteten Verzögerungskräfte wirken. Das Aufstellmoment wird dabei neben den Verzögerungskräften durch den Hebelarm 11 bestimmt, der sich aus der Höhenlage des Gesamtschwerpunkts 10 zu der Radachse 9 ergibt. Verläuft die Kraftlinie einer aus den erwähnten Kräften resultierenden Kraft 12 oberhalb der Radachse 9, stellt sich das Motorrad 1 auf - wie in der Figur 1 dargestellt. Gelingt es, den Gesamtschwerpunkt 10 tiefer zu legen, verläuft dadurch die Resultierende 12 durch die Radachse 9 oder unterhalb davon. Das Aufstellmoment bleibt in diesen Fällen kleiner als das entgegengesetzt wirkende Moment, das sich aus dem Gesamtgewicht und dem horizontaler Abstand des Gesamtschwerpunkts 10 zur Radachse 9 ergibt. Das Motorrad richtet sich beim Aufprall nicht auf, sein Hinterrad bleibt auf der Fahrbahn.

Diese Wirkung lässt sich noch verstärken, indem das Vorderrad - wie weiter unten näher beschrieben - durch Bremseneingriff blockiert wird. Der Drehpunkt verschiebt sich dadurch von der Radachse 9 zu einem Anstoßpunkt 13, an dem das Vorderrad 3 gegen das Hindernis gepresst wird. Die Resultierende 12 verläuft bereits im gezeichneten Zustand unterhalb dieses Anstoßpunkts 13 und wandert noch tiefer bei der erfindungsgemäßen Absenkung des Schwerpunktes.

In **Figur 2** sind erfindungsgemäß Maßnahmen vorgesehen, die im Kollisionsfall den Gesamtschwerpunkt absenken. Das hier gezeigte Motorrad entspricht in seiner Ausführung einem herkömmlichen Motorrad, so dass auf die genauere Beschreibung der Einzelheiten insoweit verzichtet wird, als sie keinen Beitrag zum Verständnis der vorliegenden Erfindung leisten.

Das Motorrad 1' weist wiederum ein Vorderrad 3', ein Hinterrad 4' sowie einen Fahrzeugaufbau 5' auf, an dem Fahrzeugräder über Federsysteme angebracht sind. Hierfür ist das Vorderrad 3' mit seiner Radachse 9' in einer Teleskopgabel 14 gehalten. Die Teleskopgabel 14 selbst ist schwenkbar mit einem Längslenker 15 am Fahrzeugaufbau angelenkt. Zwischen einem Stützlager am Fahrzeugaufbau 5' und dem Längslenker 15 sitzt eine pneumatische Feder 16. Der Vollständigkeit halber sei noch erwähnt, dass die Teleskopgabel 14 in ihrem oberen Abschnitt eine weitere gelenkige Anbindung am Fahrzeugaufbau aufweist.

Die Radachse des Hinterrads 4' ist in ähnlicher Weise in einer Hinterradschwinge 17 drehbar gehalten, während die Hinterradschwinge 17 schwenkbar am Fahrzeugaufbau angelenkt ist. Eine weitere Luftfeder 18 stützt die Hinterradschwinge 17 gegenüber dem Fahrzeugaufbau ab. Sowohl die Luftfeder 18 als auch die zuvor beschriebene Luftfeder 16 der Vorderradführung werden über einen bordeigenen, nicht weiter dargestellten Kompressor versorgt.

Das Motorrad 1' bietet Platz für einen Fahrer und einen Beifahrer. Es weist hierfür einen vorderen Fahrzeugsitz 19 und einen dahinter angeordneten Soziussitz 20 auf. Beide Sitze sind mit je einem luftgefüllten Sitzkissen ausgestattet, die Luftkammern sind mit 21 bzw. 22 bezeichnet. Diese Luftkammer können ebenfalls mit dem erwähnten Kompressor versorgt werden. Im normalen Fahrbetrieb können dabei der Fahrer und sein Sozius ihre individuelle Sitzhöhe bzw. Sitzhärte durch die entsprechende Regulierung der Luftzufuhr einstellen.

Im Anschluss an den Fahrersitz befindet sich vorne im Bereich eines Kraftstofftanks 23 eine nicht näher dargestellte Airbageinheit mit einem Airbag, der im Kollisionsfall schlagartig aufgeblasen wird.

Schließlich lässt sich das Vorderrad 9' mit einer Scheibenbremsanlage 24 in der üblichen Weise durch Betätigen einer entsprechenden Armatur abbremsen. Daneben ist der Bremszylinder der Scheibenbremsanlage 24 über eine Leitung 25 mit einem Bremsgerät 26 verbunden, das unabhängig von der Betätigung der Bremsarmatur den Bremsvorgang einleiten kann.

Der Kompressor für die Radfederungen und die Sitzkissen sowie das Bremsgerät und die Airbageinheit werden von einer Auslöseelektronik angesteuert. Diese Elektronik erhält Signale von Sensoren, die einmal eine unmittelbar bevorstehende Kollision detektieren (Pre Crash Sensoren) und des Weiteren im Moment der Kollision (Crash Sensoren) ein entsprechendes Signal abgeben.

Kommt es zu einer Kollision geben die Sensoren die entsprechenden Signale an die Auslöseelektronik. Diese aktiviert sogleich die Airbageinheit, steuert daneben aber auch Ventile der Luftfedern 16, 18 und der Sitzkissen 19, 20 an, um die dort enthaltene Luft abzulassen. Während sich der Airbag entfaltet, senkt sich das Motorrad 1' mit dem Fahrer und Beifahrer und damit der Gesamtschwerpunkt. Gleichzeitig blockiert das Bremsgerät 26 das Vorderrad 3' mit der bereits beschriebenen Folge, dass sich das Motorrad 1' nicht mehr um die vordere Radachse 9' drehen kann.

## Patentansprüche

1. Fahrzeug, insbesondere Zweiradfahrzeug wie Motorrad oder ähnlichem, mit einem Rückhaltesystem, das den auf einem Fahrzeugsitz befindlichen Fahrer und/oder Beifahrer bei einem Aufprall des Fahrzeuges auf ein Hindernis dort festhält, und mit vorderen und hinteren Fahrzeugrädern, die am Fahrzeugaufbau federnd angebracht sind, sowie einer Bremseinrichtung für das Vorderrad, **dadurch gekennzeichnet, dass** beim Aufprall des Fahrzeugs die Federung der Radaufhängung und/oder die Sitzhöhe veränderbar und/oder das Vorderrad durch die Bremseinrichtung blockierbar ist.

2. Fahrzeug nach Anspruch 1, **dadurch gekennzeichnet, dass** die Federbasis einer die Radfederung bildenden Schraubenfeder reversibel oder irreversibel verstellbar ist.

3. Fahrzeug nach Anspruch 2, **dadurch gekennzeichnet, dass** die Federbasis elektrisch und/oder hydraulisch verstellbar ist.

4. Fahrzeug nach Anspruch 2, **dadurch gekennzeichnet, dass** die Federbasis durch einen im Kollisionsfall entfernbaren Bolzen festgelegt ist.

5. Fahrzeug nach Anspruch 4, **dadurch gekennzeichnet, dass** der Bolzen durch die Crashenergie herausgeschlagen wird.

6. Fahrzeug nach Anspruch 4, **dadurch gekennzeichnet, dass** der Bolzen durch ein von einer Auslöseelektronik angesteuertes Stellglied entfernbar ist.

7. Fahrzeug nach Anspruch 1, **dadurch gekennzeichnet, dass** eine die Radfederung bildende Schraubenfeder zusammenspannbar ist.

8. Fahrzeug nach Anspruch 1, **dadurch gekennzeichnet, dass** die Federkraft eines die Radfederung bildenden Federsystems einstellbar ist.

9. Fahrzeug nach Anspruch 8, **dadurch gekennzeichnet, dass** das Federsystem eine hydraulische und/oder pneumatische Feder (16, 18) aufweist, und dass der Druck der Federn (16, 18) veränderbar ist.

10. Fahrzeug nach einem der Ansprüche 1 bis 9 mit einer höhenverstellbaren Sitzbank, **dadurch gekennzeichnet, dass** sich die Fixierung der Höhenverstellung durch die Crashenergie löst.

11. Fahrzeug nach einem der Ansprüche 1 bis 9 mit einer höhenverstellbaren Sitzbank, **dadurch gekennzeichnet, dass** ein von einer Auslöseelektronik angesteuertes Stellglied die Fixierung der Höhenverstellung löst.

12. Fahrzeug nach einem der Ansprüche 1 bis 9, **dadurch gekennzeichnet, dass** der Sitz durch ein Stellglied in eine niedere Position bewegt wird.

13. Fahrzeug nach einem der Ansprüche 1 bis 9 mit einem ein Sitzpolster aufweisenden Fahrzeugsitz **dadurch gekennzeichnet, dass** die Höhe des Sitzpolster (19, 20) in sich verringerbar ist.

14. Fahrzeug nach Anspruch 13, **dadurch gekennzeichnet, dass** das Sitzpolster (19, 20) mit Luft gefüllt ist, die im Kollisionsfall abgelassen wird.
